(19) Europäisches Patentamt
European Patent Office
Office européen des brevets

(11) **EP 3 390 982 B1**

(12) **EUROPÄISCHE PATENTSCHRIFT**

(45) Veröffentlichungstag und Bekanntmachung des Hinweises auf die Patenterteilung:
**29.07.2020   Patentblatt 2020/31**

(21) Anmeldenummer: **16797540.8**

(22) Anmeldetag: **16.11.2016**

(51) Int Cl.:
**G01F 23/292** (2006.01)     **G01F 25/00** (2006.01)
**G01S 7/497** (2006.01)      **G01S 17/88** (2006.01)
**G01S 17/66** (2006.01)      **G01B 11/02** (2006.01)

(86) Internationale Anmeldenummer:
**PCT/EP2016/077794**

(87) Internationale Veröffentlichungsnummer:
**WO 2017/102225 (22.06.2017 Gazette 2017/25)**

(54) **KALIBRIER-SYSTEM ZUR KALIBRATION VON ZUMINDEST EINEM ABSTANDSMESSGERÄT**

CALIBRATING SYSTEM FOR CALIBRATING AT LEAST ONE DISTANCE-MEASURING DEVICE

SYSTÈME D'ÉTALONNAGE PERMETTANT D'ÉTALONNER AU MOINS UN DISPOSITIF DE MESURE DE DISTANCE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.12.2015   DE 102015122057**

(43) Veröffentlichungstag der Anmeldung:
**24.10.2018   Patentblatt 2018/43**

(73) Patentinhaber: **Endress+Hauser SE+Co. KG**
**79689 Maulburg (DE)**

(72) Erfinder:
• **LANGENDORF, Björn**
**79685 Häg-Ehrsberg (DE)**

• **FABER, Harald**
**79541 Lörrach (DE)**
• **ROSER, Andreas**
**79585 Steinen (DE)**

(74) Vertreter: **Andres, Angelika Maria**
**Endress+Hauser Group Services**
**(Deutschland) AG+Co. KG**
**Colmarer Straße 6**
**79576 Weil am Rhein (DE)**

(56) Entgegenhaltungen:
**EP-A1- 1 067 361     EP-A1- 1 510 779**
**WO-A1-88/06713     DE-A1-102012 104 926**
**US-A- 4 373 815     US-A1- 2001 021 898**

**Beschreibung**

Die Erfindung betrifft ein Kalibrier-System zur Kalibration von zumindest einem Abstandsmessgerät sowie ein auf diesem Kalibrier-System basierendes Kalibrations-Verfahren.

In der Automatisierungstechnik, insbesondere in der Prozessautomatisierungstechnik, werden vielfach Feldgeräte eingesetzt, die zur Erfassung und/oder Beeinflussung von Prozessvariablen dienen. Zur Erfassung von Prozessvariablen dienen Sensoren, die beispielsweise in Füllstandsmessgeräten, Durchflussmessgeräten, Druck- und Temperaturmessgeräten, pH-Redoxpotential-Messgeräten, Leitfähigkeitsmessgeräten, usw. integriert sind, welche die entsprechenden Prozessvariablen Füllstand, Durchfluss, Druck, Temperatur, pH-Wert, Redoxpotential bzw. Leitfähigkeit erfassen. Zur Beeinflussung von Prozessvariablen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann. Als Feldgeräte werden im Prinzip alle diejenigen Geräte bezeichnet, die prozessnah eingesetzt werden und die prozessrelevante Informationen liefern oder verarbeiten. Im Zusammenhang mit der Erfindung werden unter Feldgeräten also auch Remote I/Os, Funkadapter bzw. allgemein elektronische Komponenten verstanden, die auf der Feldebene angeordnet sind. Eine Vielzahl solcher Feldgeräte wird von der Firma Endress + Hauser hergestellt und vertrieben.

Zur Füllstandesmessung haben sich berührungslose Messverfahren etabliert, da sie robust und wartungsarm sind. Ein weiterer Vorteil besteht in der Fähigkeit, kontinuierlich messen zu können. Hier haben sich speziell Radarbasierte Messverfahren, die nach dem Puls-Laufzeit- oder dem FMCW-Prinzip arbeiten, durchgesetzt. Bei diesen Messverfahren werden Mikrowellen periodisch mit einer vorgegebenen Wiederholrate, z.B. in einer Größenordnung von 1 bis 10 MHz mit Mittenfrequenzen im Gigahertzbereich in Richtung des Füllguts gesendet. Hierdurch wird der Abstand zwischen dem Füllstandsmessgerät und der Oberfläche des Füllgutes bestimmt. Auf Basis dessen kann der Füllstand berechnet werden.

Zur Kalibration oder zum Eichen von Abstandsmessgeräten, insbesondere von eingangs erwähnten Füllstandsmessgeräten, kommen Messstrecken zum Einsatz, deren Länge mindestens dem Messbereich des Abstandsmessgeräts entspricht. Im Fall von Füllstandsmessung entspricht der maximale Messbereich einem maximalen Füllstand von bis zu 40 m.

Auf der jeweiligen Messstrecke ist ein Reflektor verschiebbar angeordnet. Das zu kalibrierende Abstandsmessgerät wird an einem ersten Ende der Messstrecke montiert. Im Anschluss wird zur Kalibration ein Messsignal in Richtung des Reflektors ausgesendet und das reflektierte Mess-Signal empfangen. Das reflektierte Mess-Signal wird auf den entsprechenden Abstands-

Wert ($X_i$) abgeglichen, welcher mittels eines kalibrierten Normals bestimmt wurde. Standardmäßig werden zur Bestimmung der Linearität mehrere Abstands-Werte ($X_1$-$X_n$) angefahren.

Im einfachsten Fall handelt es sich bei dem kalibrierten Normal um ein geeichtes Maßband. Aus Gründen der Genauigkeit werden in der Regel jedoch optische Verfahren wie Interferometrie verwendet, so dass die Genauigkeit des kalibrierten Normals um mindestens eine Größenordnung höher als die geforderte Genauigkeit des zu kalibrierenden Abstandsmessgeräts ist.

Für den Fall, dass ein optisches Verfahren als kalibriertes Normal verwendet wird, kann die Bestimmung des Abstands-Wertes ($X_i$) durch das entsprechende optische Gerät nicht direkt erfolgen, da es nicht an ein und derselben Stelle wie das zu kalibrierende Abstandsmessgerät angebracht sein kann. Deswegen ist es üblich, das optische Gerät nicht wie das Abstandsmessgerät am Anfang der Messstrecke zu positionieren, sondern am gegenüberliegenden Ende. Ein hierauf basierender Aufbau ist in der Veröffentlichungsschrift DE 10 2012 104 926 A1 beschrieben.

Bei solch einer Konfiguration bildet sich der Abstands-Wert aus der Differenz zwischen dem Abstand des optischen Geräts zum Reflektor ($M_i$) und einer Referenz-Distanz (R), wobei es sich bei der Referenz-Distanz (R) um den Abstand vom optischen Gerät zum Abstandsmessgerät handelt:

$$X_i = R - M_i$$

Die Ermittlung der Referenz-Distanz (R) ist auf verschiedene Arten möglich. Zum einen kann auch dies durch ein geeichtes Maßband erfolgen. Hierbei wäre die Messgenauigkeit der Messstrecke jedoch wiederum auf die Genauigkeit des Maßbandes beschränkt.

Bei einer Messstrecke, wie sie in der DE 10 2012 104 926 A1 gezeigt ist, bietet es sich an, dass das optische Gerät zusätzlich auch die Referenz-Distanz (R) ermittelt. Dies ist allerdings nur umsetzbar, wenn der Reflektor derart klappbar ist, dass er sich im umgeklappten Zustand außerhalb des optischen Pfades zwischen optischem Gerät und Abstandsmessgerät befindet.

Nachteilhaft hieran ist, dass ein solcher Klappmechanismus in der Praxis kaum anwendbar ist, denn zumindest im Falle von Füllstandsmessgeräten ist die Messstrecke in der Regel als Schwallrohr realisiert. Daher ist der Reflektor in diesem Fall während der Kalibration innerhalb des Schwallrohres nicht zugänglich. Dementsprechend ist es auch nicht möglich, die Messung der Referenz-Distanz (R) während der Kalibration (gegebenenfalls sogar mehrfach) zu wiederholen. Gerade dies wirkt sich jedoch nachteilhaft auf die Genauigkeit einer mehrere Stunden dauernden Kalibration aus, da sich der Wert der Referenz-Distanz (R) bedingt durch Temperatur-Schwankungen im Laufe der Kalibration ändern

Der Erfindung liegt daher die Aufgabe zugrunde, ein Kalibrier-System und ein entsprechendes Kalibrier-Verfahren zur Kalibration von zumindest einem Abstandsmessgerät bereitzustellen, mit dem eine verbesserte Kalibration erreicht werden kann.

Die Erfindung löst diese Aufgabe durch ein Kalibrier-System gemäß dem unabhängigen Patentanspruch 1.

Durch das erfindungsgemäße Kalibrier-System wird es ermöglicht, sowohl den Abstand ($M_i$) zum Reflektor, als auch die Referenz-Distanz ($R_i$) durch ein einziges Messgerät, nämlich den Laser-Tracker bestimmen zu können, ohne dass der Reflektor klappbar sein muss. Hierdurch wird es vermieden, dass bei der Bestimmung des Abstandes ($M_i$) und der Referenz-Distanz ($R_i$) durch unterschiedliche Messgeräte eine systematische Messabweichung verursacht wird. Auch eine mehrfache Erfassung der Referenz-Distanz ($R_i$) während der Kalibration selber ist hierdurch möglich.

Voraussetzung für die Bestimmung des Abstandes ($M_i$) beziehungsweise der Referenz-Distanz ($R_i$) durch den Laser-Tracker ist, dass am Reflektor und am Abstandsmessgerät jeweils ein Retroreflektor oder eine entsprechende Optik zur Reflektion des Laser-Strahls angebracht ist. Entsprechende Laser-Tracker, die den jeweiligen Retroreflektor erkennen, eine absolut-Distanzmessung durchführen, und den Retroreflektor bei Bewegung verfolgen können, werden beispielsweise von der Firma Leica Geosystems unter dem Produktnamen "Leica Absolute Tracker AT 40X" hergestellt und vertrieben. Ein zentraler Vorteil des erfindungsgemäßen Kalibrier-Systems resultiert aus der Möglichkeit, mehrere Abstandsmessgeräte quasi gleichzeitig kalibrieren zu können. In diesem Fall ist das Kalibrier-System so zu erweitern, dass es zur Kalibration mehrerer Abstandsmessgeräte eine Mehrzahl an Messstrecken mit jeweils einem Reflektor umfasst. Hierbei ist die Spiegel-Anordnung derart auszugestalten, dass es dem Laser-Tracker möglich ist, an jeder Messstrecke einen Abstand ($M_i$) zu dem jeweiligen Reflektor und eine Referenz-Distanz ($R_i$) zu dem jeweiligen Abstandsmessgerät zu bestimmen.

Durch die Verwendung des Laser-Trackers in Kombination mit der Spiegel-Anordnung ergibt sich im Rahmen der Erfindung ein weiterer Vorteil hinsichtlich einer möglichen Automatisierung der Kalibration: Eine Automatisierung kann durch eine entsprechende Einlernen des Laser-Trackers erreicht werden, durch die der Laser-Tracker die für die Erkennung des jeweiligen Retroreflektors erforderliche Grob-Ausrichtung im Bedarfsfall selbstständig vornehmen kann.

Eine weitere Automatisierung der Kalibration kann dadurch erzielt werden, dass die zumindest eine Messstrecke zusätzlich eine Stelleinrichtung zum Verschieben des zumindest einen Reflektors umfasst. Die Durchführung der Kalibration könnte hierbei mittels einer übergeordneten Einheit, die zur Steuerung des Abstandsmessgerätes, des Laser-Trackers und/oder der Stelleinrichtung vorgesehen ist, erfolgen.

Für den Fall, dass es sich bei dem zu kalibrierenden Abstandsmessgerät um ein Füllstandsmessgerät handelt, kann eine verbesserte Kalibration erreicht werden, sofern es sich bei der zumindest einen Messstrecke um ein Schwallrohr handelt. Dies entspricht in der Regel der späteren Messumgebung und bietet dementsprechend eine sehr anwendungsnahe Kalibration. Üblich ist in solchen Fällen, dass das zumindest eine Schwallrohr eine Nennweite zwischen DN 100 und DN 300 aufweist.

Des Weiteren wird die Aufgabe, die der Erfindung zugrunde liegt, durch ein Verfahren gemäß dem unabhängigen Patentanspruch 7 gelöst.

Durch das erfindungsgemäße Kalibrier-System wird es außerdem möglich, dass die Referenz-Distanz ($R_1,..,R_n$) unter Verschiebung des Reflektors entlang der Messstrecke bei verschiedenen Mess-Distanzen ($X_1$-$X_n$) bestimmt wird. Somit wird das Problem, dass sich der Wert der Referenz-Distanz (R) bedingt Temperatur-Schwankungen im Laufe der Kalibration ändern kann, umgangen.

Im Hinblick auf diese Umwelteinflüsse wird eine weitere Verbesserung der Kalibration erreicht, wenn bei der Bestimmung des Abstandes ($M_i$), der Referenz-Distanz ($R_i$), und/oder des reflektierten Mess-Signals ($D_i$) die Temperatur, den Umgebungsdruck und/oder die Luftfeuchtigkeit mitberücksichtigt wird. Hierzu ist es notwendig, die entsprechenden Umwelteinflüsse zu erfassen und eine darauf basierende Korrektur des Abstandes ($M_i$), der Referenz-Distanz ($R_i$), und/oder des reflektierten Mess-Signals ($D_i$) durchzuführen. Je nach Typ des Laser-Trackers ist dies als vorintegrierte Funktion bereits vorhanden.

Für den Fall, dass das erfindungsgemäße Kalibrier-System zur quasi gleichzeitigen Kalibration mehrerer Abstandsmessgeräte eine Mehrzahl an Messstrecken umfasst, wird das vorhergehend beschriebene Verfahren an jeder dieser Messstrecken ausgeführt. Dementsprechend wird an jeder einzelnen Messstrecke

- durch den Laser-Tracker eine Referenz-Distanz ($R_i$) bestimmt,
- durch den Laser-Tracker ein Abstand ($M_i$) bestimmt,
- anhand der Referenz-Distanz ($R_i$) und anhand des Abstandes ($M_i$) eine Mess-Distanz ($X_i$) ermittelt,
- ein vom Abstandsmessgerät ausgesendetes Mess-Signal ($D_i$) nach Reflexion am Reflektor durch das Abstandsmessgerät
- empfangen, und
- anhand des reflektierten Mess-Signals ($D_i$) und der Mess-Distanz ($X_i$) das Abstandsmessgerät kalibriert.

Anhand der nachfolgenden Figuren wird die Erfindung näher erläutert. Es zeigt:

Fig. 1: eine schematische Darstellung des erfindungsgemäßen Kalibrier-Systems,

Fig. 2: ein Kalibrier-System mit mehreren Messstrecken, und

Fig. 3: eine Anordnung mehrerer Schwallrohre als Messstrecken.

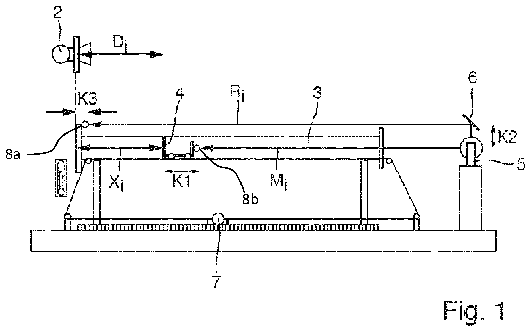

Fig. 1 zeigt ein erfindungsgemäßes Kalibrier-System 1 zum Kalibrieren eines Füllstandsmessgergätes 2. Hierzu umfasst das Kalibrier-System 1 eine als Schwallrohr ausgestaltete Messstrecke 3. Das Füllstandsmessgerät 2 ist an einem ersten Ende des Schwallrohres 3 montiert, so dass es Mess-Signale $D_i$ in Richtung eines im Schwallrohr 3 befindlichen Reflektors 4 senden und nach Reflektion empfangen kann. Der Reflektor 4 ist innerhalb des Schwallrohres 3 verschiebbar positioniert. Hierdurch lässt sich der Abstand $X_i$ zwischen dem Füllstandsmessgerät 2 und dem Reflektor 4 zu Kalibrationszwecken verändern. Die Positionierung wird hierbei durch eine Stelleinrichtung 7, die über einen Seilzug mit dem Reflektor 4 verbunden ist, gesteuert. Zu Gunsten einer vereinfachten Übersicht ist das Füllstandsmessgerät 2 in Fig. 1 versetzt zum Schwallrohr 3 dargestellt.

Am gegenüberliegenden Ende des Schwallrohres 3 ist ein Laser-Tracker 5 aufgestellt. Damit der Laser-Tracker 5 die Distanz $M_i$ zum Reflektor 4 bzw. eine Referenz-Distanz $R_i$ zum Füllstandsmessgerät 2 bestimmen kann, ist am ersten Ende des Schwallrohres 3 und am Reflektor 4 jeweils ein Retroreflektor 8a, 8b angebracht. Um erfindungsgemäß sowohl die Referenz-Distanz $R_i$ als auch die Distanz $M_i$ zum Reflektor 4 bestimmen zu können, ist eine Spiegel-Anordnung 6 erforderlich. In der in Fig. 1 gezeigten Ausführungsvariante des Kalibrier-Systems 1 besteht die Spiegel-Anordnung 6 aus lediglich einem Spiegel, über den der Laser-Strahl des Laser-Trackers 5 zu dem am Füllstandsmessgerät angeordneten Retroreflektor 8a geleitet werden kann. Alternativ könnten der Laser-Tracker 5 und die Spiegel-Anordnung 6 im Sinne der Erfindung natürlich auch derart angeordnet sein, dass der am Füllstandsmessgerät 2 befindliche Retroreflektor 8a direkt im optischen Pfad des Laser-Trackers 5 liegt, und das der Retroreflektor 8b des Reflektors 4 über die Spiegel-Anordnung 6 ansteuerbar ist. Unabhängig davon ist es jedoch vorteilhaft, wenn der Laser-Tracker 5 so eingelernt ist, dass er beide Retroreflektoren 8a, 8b beziehungsweise die Spiegel-Anordnung 6 selbstständig ansteuern kann.

Durch die Bestimmung der Distanz $M_i$ zum Reflektor 4 sowie der Referenz-Distanz $R_i$ durch den Laser-Tracker 5 ist es möglich, auf Basis dieser Distanzen $R_i$, $M_i$ den Abstand $X_i$ zwischen dem Füllstandsmessgerät 2 und dem Reflektor 4 zu errechnen und anhand dessen die Kalibration durchzuführen:

$$X_i = R_i - M_i - K$$

Dies kann beispielsweise in einer übergeordneten Einheit, in der die Daten des Füllstandsmessgerätes 2, des Laser-Trackers 5, und/oder der Stelleinrichtung 7 verarbeitet werden, geschehen. Dabei muss bei der Berechnung ein Korrekturfaktor K berücksichtigt werden. Dieser bildet sich aus der Summe einzelner Distanz-Korrekturen $K_1$, $K_2$, $K_3$, die sich durch versetzte Anordnung der Retroreflektoren 8a, 8b beziehungsweise einer Verlängerung des Strahlengangs durch die Spiegel-Anordnung 6 ergibt.

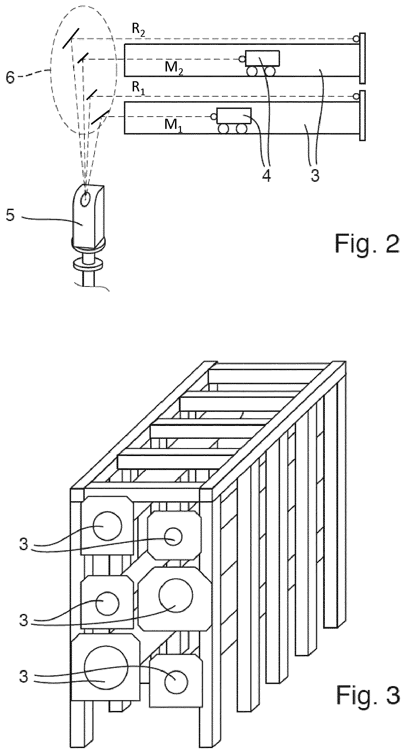

In Fig. 2 ist dargestellt, dass das erfindungsgenmäße Kalibrier-System 1 nicht nur eine Messstrecke 3, sondern auch eine Vielzahl an Messstrecken 3 umfassen kann. In diesem Fall muss die Spiegel-Anordnung 6 derart mit Spiegeln ausgestattet sein, dass es dem Laser-Tracker 5 für jede einzelne Messstrecke 3 möglich ist, die Distanz $M_1$, $M_2$ zum jeweiligen Reflektor 4 sowie die jeweilige Referenz-Distanz $R_1$, $R_2$ zu bestimmen. Hieraus ergibt sich ein zentraler Vorteil des erfindungsgemäßen Kalibrier-Systems 1, nämlich die Möglichkeit, mehrere Abstandsmessgeräte 2 quasi gleichzeitig zu kalibrieren und somit eine entscheidende Zeitersparnis zu erreichen. Der Einfachheit halber sind die zu kalibrierenden Füllstandsmessgeräte 2 in Fig. 2 nicht mit abgebildet.

Wie aus Fig. 3 hervorgeht, ist es nicht zwingend notwendig, dass im Falle von mehreren Messstrecken 3 diese ausschließlich über- oder nebeneinander angeordnet sind. Im Gegensatz zu der in Fig. 3 gezeigten Darstellung müssen die Messstrecken auch nicht parallel zueinander angeordnet sein. In der Darstellung handelt es sich bei den Messstrecken 3 um Schwallrohre mit verschiedenen Durchmessern. Dies ermöglicht insbesondere eine quasi gleichzeitige Kalibration mehrerer Füllstandsmessgeräte 2, die aufgrund unterschiedlicher Messumgebungen eine Kalibration an unterschiedlichen Schwallrohr-Durchmessern benötigen.

Bezugszeichenliste

| | |
|---|---|
| 1 | Kalibrier-System |
| 2 | Abstandsmessgerät |
| 3 | Messstrecke |
| 4 | Reflektor |
| 5 | Laser-Tracker |
| 6 | Spiegel-Anordnung |
| 7 | Stelleinrichtung |
| 8a,b | Retroreflektoren |
| $D_i$ | Mess-Signal |
| $M_i$ | Abstand |
| $R_i$ | Referenz-Distanz |
| $X_i$ | Mess-Distanz |

**Patentansprüche**

1. Kalibrier-System (1) zur Kalibration von zumindest einem Abstandsmessgerät (2), umfassend:

   - Zumindest eine Messstrecke (3), wobei das zumindest eine Abstandsmessgerät (2) an einem ersten Ende der Messstrecke (3) montierbar ist,
   - zumindest einen verschiebbar auf der zumindest einen Messstrecke (3) montierbaren Reflektor (4) zur Reflexion eines von dem zumindest einen Abstandsmessgerät (2) ausgesendeten Mess-Signals ($D_i$), und
   - einen Laser-Tracker (5), der an einem dem Abstandsmessgerät (2) gegenüberliegenden Ende der Messstrecke (3) angeordnet ist,

   **dadurch gekennzeichnet, dass**
   eine Spiegel-Anordnung (6) vorgesehen ist, mittels der es dem Laser-Tracker (5) möglich ist, zumindest einen Abstand ($M_i$) zu dem zumindest einen Reflektor (4) und zumindest eine Referenz-Distanz ($R_i$) zu dem zumindest einen Abstandsmessgerät (2) zu bestimmen, und
   wobei eine übergeordnete Einheit vorgesehen ist, die ausgelegt ist, um

   - anhand des Abstandes ($M_i$) und der Referenz-Distanz ($R_i$) eine Mess-Distanz ($X_i$) des Abstandsmessgerätes (2) zum Reflektor (4) zu ermitteln, und
   - anhand der Mess-Distanz ($X_i$) und dem Mess-Signal ($D_i$) das Abstandsmessgerät (2) zu kalibrieren.

2. Kalibrier-System nach Anspruch 1,
   **dadurch gekennzeichnet, dass**
   das Kalibrier-System (1) zur Kalibration mehrerer Abstandsmessgeräte (2) eine Mehrzahl an Messstrecken (3) mit jeweils einem Reflektor (3) umfasst, wobei die Spiegel-Anordnung (6) derart ausgestaltet ist, dass es dem Laser-Tracker (5) möglich ist, an jeder Messstrecke (3) einen Abstand ($M_i$) zu dem jeweiligen Reflektor (4) und eine Referenz-Distanz ($R_i$) zu dem jeweiligen Abstandsmessgerät (2) zu bestimmen.

3. Kalibrier-System nach Anspruch 1 oder 2,
   **dadurch gekennzeichnet, dass**
   die zumindest eine Messstrecke des Weiteren eine Stelleinrichtung (7) zum Verschieben des zumindest einen Reflektors (4) umfasst.

4. Kalibrier-System nach Anspruch 1, 2 oder 3,
   **dadurch gekennzeichnet, dass**
   eine übergeordnete Einheit zur Steuerung des Abstandsmessgerätes (2), des Laser-Trackers (5) und/oder der Stelleinrichtung (7) vorgesehen ist.

5. Kalibrier-System nach zumindest einem der vorhergehenden Ansprüche,
   **dadurch gekennzeichnet, dass**
   es sich bei der zumindest einen Messstrecke (3) um ein Schwallrohr handelt

6. Kalibrier-System nach Anspruch 5,
   **dadurch gekennzeichnet, dass**
   das zumindest eine Schwallrohr (3) eine Nennweite zwischen DN 100 und DN 300 aufweist.

7. Verfahren zur Kalibration von zumindest einem Abstandsmessgerät (2) mittels des in zumindest einem der vorhergehenden Ansprüche beschriebenen Kalibrier-Systems (1),
   folgende Verfahrensschritte umfassend:

   - durch den Laser-Tracker (5) wird eine Referenz-Distanz ($R_i$) zum Abstandsmessgerät (2) bestimmt,
   - durch den Laser-Tracker (5) wird ein Abstand ($M_i$) zu einem Reflektor (4) des Kalibriersystems (1) bestimmt,
   - anhand der Referenz-Distanz ($R_i$) und anhand des Abstandes ($M_i$) wird eine Mess-Distanz ($X_i$) des Abstandsmessgerätes (2) zum Reflektor (4) ermittelt,
   - ein vom Abstandsmessgerät (2) ausgesendetes Mess-Signal ($D_i$) wird nach Reflexion am Reflektor (4) durch das Abstandsmessgerät (2) empfangen, und
   - anhand des reflektierten Mess-Signals ($D_i$) und der Mess-Distanz ($X_i$) wird das Abstandsmessgerät kalibriert.

8. Verfahren nach Anspruch 7, wobei die Referenz-Distanz ($R_1,.., R_n$) unter Verschiebung des Reflektors (4) entlang der Messstrecke (3) bei verschiedenen Mess-Distanzen ($X_1$-$X_n$) bestimmt wird.

9. Verfahren nach einem der Ansprüche 7 oder 8, wobei bei der Bestimmung des Abstandes ($M_i$), der Referenz-Distanz ($R_i$), und/oder des reflektierten Mess-Signals ($D_i$) die Temperatur, den Umgebungsdruck und/oder die Luftfeuchtigkeit mitberücksichtigt wird.

10. Verfahren nach zumindest einem der Ansprüche 7 bis 9, wobei für den Fall, dass das Kalibrier-System eine Mehrzahl an Messstrecken (3) umfasst, an jeder dieser Messstrecken (3)

   - durch den Laser-Tracker (5) eine Referenz-Distanz ($R_i$) bestimmt wird,
   - durch den Laser-Tracker (5) ein Abstand ($M_i$) bestimmt wird,
   - anhand der Referenz-Distanz ($R_i$) und anhand

des Abstandes ($M_i$) eine Mess-Distanz ($X_i$) ermittelt wird,
- ein vom Abstandsmessgerät (2) ausgesendetes Mess-Signal ($D_i$) nach Reflexion am Reflektor (4) durch das Abstandsmessgerät (2) empfangen wird, und
- anhand des reflektierten Mess-Signals ($D_i$) und der Mess-Distanz ($X_i$) das Abstandsmessgerät kalibriert wird.

## Claims

1. Calibration system (1) for the calibration of at least a distance meter (2), comprising:

   - at least one measuring section (3), wherein the at least one distance meter (2) can be mounted on a first end of the measuring section (3),
   - at least a reflector (4) which can be mounted in a moveable manner on the at least one measuring section (3), said reflector being designed to reflect a measuring signal ($D_i$) emitted by the at least one distance meter (2), and
   - a laser tracker (5), which is arranged on an end of the measuring section (3) situated opposite the distance meter (2),

   **characterized in that**
   a mirror arrangement (6) is provided by means of which it is possible for the laser tracker (5) to determine at least a distance ($M_i$) from the at least one reflector (4) and at least a reference distance ($R_i$) from the at least one distance meter (2), and wherein a higher-level unit is provided that is designed to

   - determine a measured distance ($X_i$) of the distance meter (2) to the reflector (4) using the distance ($M_i$) and the reference distance ($R_i$), and
   - calibrate the distance meter (2) using the measured distance ($X_i$) and the measuring signal ($D_i$).

2. Calibration system as claimed in Claim 1, **characterized in that**
   the calibration system (1) designed for the calibration of several distance meters (2) comprises multiple measuring sections (3) each with a reflector (3), wherein the mirror arrangement (6) is designed in such a way that the laser tracker is able to determine, on every measuring section (3), a distance ($M_i$) to the respective reflector (4) and a reference distance ($R_i$) to the respective distance meter (2).

3. Calibration system as claimed in Claim 1 or 2, **characterized in that**
   the at least one measuring section further comprises a positioning unit (7) to move the at least one reflector (4).

4. Calibration system as claimed in Claim 1, 2 or 3, **characterized in that**
   a higher-level unit is provided to control the distance meter (2), the laser tracker (5) and/or the positioning unit (7).

5. Calibration system as claimed in at least one of the previous claims, **characterized in that**
   the at least one measuring section (3) is a stilling well.

6. Calibration system as claimed in Claim 5, **characterized in that**
   the at least one stilling well (3) has a nominal diameter between DN 100 and DN 300.

7. Procedure for the calibration of at least one distance meter (2) using the calibration system (1) described in at least one of the previous claims, said procedure comprising the following steps:

   - a reference distance ($R_i$) to the distance meter (2) is determined using the laser tracker (5),
   - a distance ($M_i$) to the reflector (4) of the calibration system (1) is determined using the laser tracker (5),
   - a measured distance ($X_i$) between the distance meter (2) and the reflector (4) is determined using the reference distance ($R_i$) and the distance ($M_i$),
   - a measuring signal ($D_i$) emitted by the distance meter (2) is received by the distance meter (2) after being reflected at the reflector (4), and
   - the distance meter (2) is calibrated using the reflected measuring signal ($D_i$) and the measured distance ($X_i$).

8. Procedure as claimed in Claim 7, wherein the reference distance ($R_1$, ..., $R_n$) is determined by moving the reflector (4) along the measuring section (3) at different measured distances ($X_1$-$X_n$).

9. Procedure as claimed in one of the Claims 7 or 8, wherein the temperature, the ambient pressure and/or the humidity are also taken into consideration when determining the distance ($M_i$), the reference distance ($R_i$) and/or the reflected measuring signal ($D_i$).

10. Procedure as claimed in at least one of the Claims 7 to 9, wherein, if the calibration system comprises multiple measuring sections (3), the following is performed at each of these measuring sections (3)

    - a reference distance ($R_i$) is determined by the laser tracker (5),

- a distance ($M_i$) is determined by the laser tracker (5),
- a measured distance ($X_i$) is determined on the basis of the reference distance ($R_i$) and the distance ($M_i$),
- a measuring signal ($D_i$) emitted by the distance meter (2) is received by the distance meter (2) after being reflected at the reflector (4),
- the distance meter (2) is calibrated using the reflected measuring signal ($D_i$) and the measured distance ($X_i$).

**Revendications**

1. Système d'étalonnage (1) destiné à l'étalonnage d'au moins un appareil de mesure de distance (2), comprenant :

   - au moins une section de mesure (3), l'au moins un appareil de mesure de distance (2) pouvant être monté sur une première extrémité de la section de mesure (3),
   - au moins un réflecteur (4) pouvant être monté de façon déplaçable sur l'au moins une section de mesure (3), lequel réflecteur est destiné à la réflexion du signal de mesure ($D_i$) émis par l'au moins un appareil de mesure de distance (2), et
   - un dispositif de poursuite laser (5), qui est disposé sur une extrémité de la section de mesure (3) située à l'opposé de l'appareil de mesure de distance (2),

   **caractérisé**
   **en ce qu'**un arrangement miroir (6) est prévu, au moyen duquel le dispositif de poursuite laser (5) a la possibilité de déterminer une distance ($M_i$) par rapport à l'au moins un réflecteur (4) et au moins une distance de référence ($R_i$) par rapport à l'au moins un appareil de mesure de distance (2), et une unité maître étant prévue, laquelle est conçue de telle sorte

   - à déterminer, au moyen de la distance ($M_i$) et de la distance de référence ($R_i$), une distance de mesure ($X_i$) de l'appareil de mesure de distance (2) par rapport au réflecteur (4), et
   - à étalonner l'appareil de mesure de distance (2) au moyen de la distance de mesure ($X_i$) et du signal de mesure ($D_i$).

2. Système d'étalonnage selon la revendication 1,
   **caractérisé**
   **en ce que** le système d'étalonnage (1) destiné à l'étalonnage de plusieurs appareils de mesure de distance (2) comprend une pluralité de sections de mesure (3) avec chacune un réflecteur (3), l'arrangement miroir (6) étant conçu de telle sorte que le dispositif de poursuite laser a la possibilité de déterminer sur chaque section de mesure (3) une distance ($M_i$) par rapport au réflecteur (4) respectif et une distance de référence ($R_i$) par rapport à l'appareil de mesure de distance (2) respectif.

3. Système d'étalonnage selon la revendication 1 ou 2,
   **caractérisé**
   **en ce que** l'au moins une section de mesure comprend en outre un dispositif de réglage (7) destiné au déplacement de l'au moins un réflecteur (4).

4. Système d'étalonnage selon la revendication 1, 2 ou 3,
   **caractérisé**
   **en ce qu'**est prévue une unité maître destinée à la commande de l'appareil de mesure de distance (2), du dispositif de poursuite laser (5) et/ou du dispositif de réglage (7).

5. Système d'étalonnage selon l'une des revendications précédentes,
   **caractérisé**
   **en ce que**, concernant l'au moins une section de mesure (3), il s'agit d'un tube de mesure.

6. Système d'étalonnage selon la revendication 5,
   **caractérisé**
   **en ce que** l'au moins un tube de mesure (3) présente un diamètre nominal compris entre DN 100 et DN 300.

7. Procédé destiné à l'étalonnage d'au moins un appareil de mesure de distance (2) au moyen du système d'étalonnage (1) décrit dans au moins l'une des revendications précédentes, lequel procédé comprend les étapes suivantes :

   - une distance de référence ($R_i$) par rapport à l'appareil de mesure de distance (2) est déterminée par le dispositif de poursuite laser (5),
   - une distance ($M_i$) par rapport au réflecteur (4) du système d'étalonnage (1) est déterminée par le dispositif de poursuite laser (5),
   - une distance de mesure ($X_i$) entre l'appareil de mesure de distance (2) et le réflecteur (4) est déterminée au moyen de la distance de référence ($R_i$) et au moyen de la distance ($M_i$),
   - un signal de mesure ($D_i$) émis par l'appareil de mesure de distance (2) est reçu par l'appareil de mesure de distance (2) après réflexion sur le réflecteur (4), et
   - l'appareil de mesure de distance (2) est étalonné au moyen du signal de mesure ($D_i$) réfléchi et de la distance de mesure ($X_i$).

8. Procédé selon la revendication 7, pour lequel la distance de référence ($R_1$, ..., $R_n$) est déterminée par

déplacement du réflecteur (4) le long de la section de mesure (3) pour différentes distances de mesure ($X_1$-$X_n$).

9. Procédé selon l'une des revendications 7 ou 8, pour lequel la température, la pression ambiante et/ou l'humidité de l'air est/sont prise(s) en compte pour la détermination de la distance ($M_i$), de la distance de référence ($R_i$) et/ou du signal de mesure ($D_i$) réfléchi.

10. Procédé selon au moins l'une des revendications 7 à 9, pour lequel, pour le cas où le système d'étalonnage comprend une pluralité de sections de mesure (3), procédé pour lequel, sur chacune de ces sections de mesure (3)

   - une distance de référence ($R_i$) est déterminée par le dispositif de poursuite laser (5),
   - une distance ($M_i$) est déterminée par le dispositif de poursuite laser (5),
   - une distance de mesure ($X_i$) est déterminée au moyen de la distance de référence ($R_i$) et au moyen de la distance ($M_i$),
   - un signal de mesure ($D_i$) émis par l'appareil de mesure de distance (2) est reçu par l'appareil de mesure de distance (2) après réflexion sur le réflecteur (4),
   - l'appareil de mesure de distance (2) est étalonné au moyen du signal de mesure ($D_i$) réfléchi et de la distance de mesure ($X_i$).

Fig. 1

Fig. 2

Fig. 3

**IN DER BESCHREIBUNG AUFGEFÜHRTE DOKUMENTE**

**In der Beschreibung aufgeführte Patentdokumente**

- DE 102012104926 A1